# EUROPÄISCHE PATENTSCHRIFT

(11) **EP 1 484 169 B1**
(45) Veröffentlichungstag und Bekanntmachung des Hinweises auf die Patenterteilung: **28.09.2011**
(21) Anmeldenummer: 04011804.4
(22) Anmeldetag: 18.05.2004
(51) Int. Cl.: B30B 5/06, B29C 43/22, B29C 43/48

(54) **Verfahren zur Stahlbandführung in einer kontinuierlich arbeitenden Presse**
Method of guiding a steel band in a continuously operating press
Procédé de guidage de bande d'acier dans une presse à travail en continu

(30) Priorität: 18.05.2003 DE 10322225
(43) Veröffentlichungstag der Anmeldung: 08.12.2004
(73) Patentinhaber: Dieffenbacher GmbH Maschinen- und Anlagenbau, 75031 Eppingen (DE)
(72) Erfinder: Blösch, Harald, 75031 Eppingen (DE)
(74) Vertreter: Hartdegen, Anton

(56) Entgegenhaltungen:
- DE-A1- 2 643 346
- DE-A1- 4 017 791
- DE-A1- 4 301 594
- DE-A1- 19 931 176
- GB-A- 2 350 095
- US-A- 4 527 686

## Beschreibung

Die Erfindung bezieht sich auf ein Verfahren zur Stahlbandführung in einer kontinuierlich arbeitenden Presse gemäß Oberbegriff des Anspruchs 1 und eine kontinuierlich arbeitende Presse zur Durchführung des Verfahrens nach Anspruch 8.

Bei der Herstellung von Holzwerkstoffplatten aus Spänen, Fasern und/oder Schnitzeln oder der Herstellung von anderen Platten aus lignozellulosehaltigen Stoffen oder auch Kunststoffplatten werden in der Industrie zunehmend kontinuierlich arbeitende Pressen verwendet.

Die bekannten kontinuierlich arbeitenden Pressen weisen in der Regel bereits eine hohe Verfügbarkeit auf. Analysiert man die Ursachen für die Nichtverfügbarkeiten nach einer ABC-Analyse, stellt man fest, dass die häufigsten Stillstände einer kontinuierlich arbeitenden Presse durch Stahlbandund/oder Rollstangenverlauf zu verzeichnen sind.

Zur Regelung des Bandlaufes wird heute die Regelung der Antriebs- bzw. Auslauftrommeln und einer oder mehrere Bandregelwalzen im Rücklaufsystem der kontinuierlich arbeitenden Pressen eingesetzt. Problematisch sind Störgrößen, die im Pressbereich auf die Stahlbänder einwirken. Solche Störgrößen können zum Beispiel durch Schwankungen im Streugewicht entstehen. Dichteunterschiede im Pressgut, die zu asymmetrischen Kräfteprofilen in der kontinuierlich arbeitenden Presse führen, das heißt einseitige Streuüberhöhungen führen zum Beispiel zu einer spezifischen Druckerhöhung auf dieser Seite, die zu erhöhten Reibkräften im System Stahlband-Rollstangen-Abrollfächen führen. Die Reibkräfte üben einen Lenkeffekt auf die Stahlbänder in der Form aus, dass ein oder beide Stahlbänder auf die Seite mit dem höheren spezifischen Druck wandern bzw. verlaufen. Über die Schrägstellung der Auslauftrommeln bzw. Antriebstrommeln in der Horizontal-Ebene durch Stellantriebe wird dem Bandverlauf entgegengewirkt, um das Stahlband so im zulässigen Bereich der kontinuierlich arbeitenden Presse zu halten. Durch die Schrägstellung der Antriebstrommeln wirken Rückstellkräfte auf das Stahlband ein. Allerdings sind die Stahlbänder im Pressbereich durch den hohen Pressdruck massiv eingespannt, so dass die im Auslauf ansetzenden Rückstellkräfte nur bedingt eine Rückwirkung in den Pressbereich haben.

Bei zunehmend länger werdenden kontinuierlich arbeitenden Pressen wird die Effektivität der Schrägstellung der Antriebstrommeln als Regelmechanismus immer geringer und somit schwindet auch die Fähigkeit, dem System aufgezwungene Störgrößen auszugleichen bzw. entgegenzuwirken.

Nach dem bekannten Stand der Technik aus DE 40 17 791 C2, von dem die Erfindung ausgeht, erfolgt die Regelung des Stahlbandlaufs und die Rückstellung des Bandverlaufs dadurch, dass die Achsverstellung an einer Längsseite um den Winkel Beta an der Umlauf- und/oder der Antriebstrommelachse zumindest zu Beginn einer Verstellung eines Rahmenteils erfolgt, der durch die Kurzhubzylinder im Hochdruckbereich aus eine horizontalen Lage in eine derartige Schräglage gefahren wird, dass in Einlaufrichtung links oder rechts ein Druck- oder Wegprofil eingeregelt wird. Dabei wird durch ein bewusstes Schrägstellen der Gestelle ein asymmetrisches Druckprofil im Pressgut erzeugt und somit ein Lenkeffekt auf das Stahlband bewirkt, der von der Wirkweise identisch ist mit dem oben beschriebenen Mechanismus.

Dabei wird die Heizplatte im üblichen Betrieb nur bereichsweise einseitig angehoben. Eingebaute Verlaufssensoren im Pressbereich geben die aktuelle Position des Stahlbandes in der Presse wieder und dienen als Eingangssignal für die Regelung der Heizplattenschrägstellung. Mit diesem Verfahren können auch sehr lange kontinuierlich arbeitende Presse sicher im Bandverlauf beherrscht werden. Allerdings hat dieses Verfahren auch Nachteile. Am gravierendsten ist die Tatsache, dass durch das einseitige Anheben der Heizplatten, die Spanplattentoleranzen negativ beeinträchtigt werden. Andere Platteneigenschaften wie beispielsweise die Querzugsfestigkeit oder das Dichteprofil werden ebenfalls in Mitleidenschaft gezogen bzw. können asymmetrisch über die Plattenbreite auftreten. Zudem ist die Effektivität nicht immer zufrieden stellend. Wird bereichsweise die Heizplatte angehoben, entsteht in nachfolgenden Bereichen in denen die Heizplatte wieder parallel liegt, auf der zuvor angehobenen Seite, ein überhöhter spezifischer Pressdruck, der dem zuvor erzielten Bandlenkeffekt entgegenwirkt. Es kann deshalb nicht als ständiger Regelmechanismus verwendet werden, sondern ist nur zur Not-Bandverlaufsregelung in Extremsituationen einsetzbar.

Aus der DE 199 31 176 A1 ist ein Verfahren zur Stahlbandführung in einer kontinuierlich arbeitenden Presse bekannt geworden, in der die Zurückstellung der Stahlbänder in die Längsachse I-I durch eine Achsverstellung der Rollstangeneinführungswelle um eine zentrale Drehachse III-III auf der Längsachse I-I erfolgt, wobei die Rollstangen je nach Achsstand der Rollstangeneinführungswellen im Einlaufbereich abweichend von der Orthogonalen, schräg in den Pressbereich eingeführt werden und durch ihre Laufrichtung einseitige Schubkräfte auf die Stahlbänder ausüben, die quer zur Längsachse wirken und korrigierend auf den Stahlbandverlauf einwirken.

Der Erfindung liegt die Aufgabe zugrunde ein Verfahren anzugeben, mit dem das aus der Längsachse verlaufende Stahlband und/oder die Rollstangen im Pressbereich im Lauf ohne negative Einflüsse auf das Produkt in Richtung Ideallinie rückstellend beeinflusst werden kann und eine kontinuierlich arbeitende Presse zu schaffen zur Durchführung des Verfahrens.

Die Lösung dieser Aufgabe besteht für das Verfahren darin, dass gemäß Anspruch 1 die Rückstellung der Stahlbänder in die Längsachse der kontinuierlich arbeitenden Presse durch ein zeitlich begrenztes vertikales Anheben eines der vorderen Enden der Einlaufplatte 29) des Keilverdichtereinlaufs erfolgt, so dass sich eine einseitige Vergrößerung des Kompressionswinkels an der Einlaufplatte des Keilverdichtereinlaufs (KVE) einstellt, bis die Rückstellung des zu regelnden Stahlbandes beendet ist.

Eine zweite Lösung für die gestellte Aufgabe besteht nach Anspruch 2 darin, dass die Rückstellung der Stahlbänder in die Längsachse I-I der kontinuierlich arbeitenden Presse durch ein zeitlich begrenztes einseitiges Anheben einer zwischen der Einlauftrommel und dem Rollstangeneinführungsrad angeordneten auf das Stahlband drückenden Verdichterrolle erfolgt, so dass sich im Querschnitt der Pressgutmatte ein über die Breite abweichende Planparallelität formt und sich mit der höheren Längsseite der Pressgutmatte ein einseitig höherer Gegendruck an der Einlaufplatte des Keilverdichtereinlaufs einstellt, bis die Rückstellung des zu regelnden Stahlbandes beendet ist.

Mit der Verdichterrolle zwischen Einlauftrommel und Keilverdichter wird die Pressgutmatte über das Stahlband einseitig verdichtet. Durch die einseitige Verdichtung entsteht im Keilverdichter ein Lenkeffekt, der dadurch entsteht, dass durch die einseitig verdichtete Pressgutmatte, der Gegendruck auf dieser Seite zum Keilverdichter reduziert wird. Die Wirkung ist gleichbedeutend mit einer aktiven Reduzierung der entsprechenden Keilverdichterseite.

Eine dritte Lösung nach Anspruch 3 besteht darin, dass die Rückstellung der Stahlbänder in die Längsachse der kontinuierlich arbeitenden Presse durch ein zeitlich begrenztes einseitiges Anheben der Einlauftrommeln erfolgt, so dass sich im Querschnitt der Pressgutmatte ein über die Breite abweichende Planparallelität formt und sich mit der höheren Längsseite der Pressgutmatte ein einseitig höherer Gegendruck an der Einlaufplatte des Keilverdichtereinlaufs einstellt, bis die Rückstellung des zu regelnden Stahlbandes beendet ist.

Demnach kann gleiches wie mit der Lösung nach Anspruch 2 auch mit einer heb- und senkbaren Einlauftrommel erzielt werden, mit der sich dann die Pressgutmatte ebenfalls einseitig stärker verdichten lässt.

Eine kontinuierlich arbeitende Presse zur Durchführung dieses Verfahrens besteht nach Anspruch 8 darin, dass die Rückstellung der Stahlbänder in die Längsachse der kontinuierlich arbeitenden Presse durch ein zeitlich begrenztes einseitiges Anheben einer der Längsseiten der Stahlbänder vorgesehen ist, wobei die Einlaufplatte des Keilverdichtereinlaufs (KVE) oder die Einlauftrommel und/oder eine Verdichterrolle einseitig mittels der Stellantriebe vertikal anhebbar sind.

In Extremfällen kann auch der Keilverdichterauslauf (KVA) mit dem Keilverdichtereinlauf angehoben werden, wobei es vorteilhaft sein kann, den Kompressionswinkel der Einlaufplatte des Keilverdichterauslaufs nur um die Hälfte anzuheben.

Bei der erfindungsgemäßen Lösung der Aufgabe ist insbesondere von Vorteil, dass kein negativer Einfluß auf die Qualität bzw. die Werkstoffeigenschaften und die Maßhaltigkeit der fertigen Platte durch die Rückstellung der Stahlbänder auftritt. Durch eine bewusste Schrägstellung des Keilverdichtereinlaufs (KVE) oder der Einlauftrommel oder einer zusätzlichen Verdichterrolle macht sich eine starke Auswirkung auf den Bandverlauf bemerkbar und eine Rückstellung des verlaufenden Stahlbandes kann eingeregelt werden. Als erforderliche hydraulische Stellglieder dazu können die bereits vorhandenen oder neu hinzugefügten Stellantriebe zur Einstellung des Kompressionswinkels im Einlaufspalt verwendet werden. Entscheidend ist jedoch, dass bei diesem Verfahren das Endprodukt, die Holzwerkstoffplatte, in ihren Eigenschaften nicht beeinflusst wird, da die einseitig verdichtete Pressgutmatte nur im Einlaufspalt auf das Stahlband und/oder die Rollstangen korrigierend einwirkt aber nicht im Hauptpressbereich. Um das einseitige Anheben der Keilverdichtereinlaufplatte oder der Einlauftrommel oder der Verdichterrolle zum Lenken der Rollstangen und des Stahlbandes nutzen zu können, muss es in die Bandlaufregeleinrichtung eingebunden werden. Hierzu ist es möglich den Rollstangen- und/oder Stahlbandverlauf im Pressspalt durch Verlaufssensoren zu messen und danach die Einlaufplatten des Keilverdichtereinlaufs und gegebenenfalls auch des Keilverdichterauslaufs und/oder der Verdichterrolle oder der Einlauftrommel schräg einzustellen.

Dabei wird das Anheben durch eine Wegregelung oder indirekt durch eine druckgeregelte oder druckgesteuerte Entlastung in den Zylindern der Stellantriebe durchgeführt.

Ein oder mehrere in der Pressenmitte, im Einlaufspalt und/oder im Auslauf der kontinuierlich arbeitenden Presse angebrachter Verlaufssensoren registrierten die vorhandene Lage der Stahlbänder. Mit dieser Information wird über einen Regelkreis und Regelungsprozessor und einen PID-Regler die erforderliche Rückstellbewegung durch Stellantriebe durchgeführt.

Zum Ausgleich von grundlegenden Bandverlaufstendenzen kann eine Grundeinstellung mit fest eingestelltem Differenzhub oder eine fest eingestellte Druckdifferenz dienen.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: die kontinuierlich arbeitende Presse in schematischer Darstellung zur Durchführung des Verfahrens in Seitenansicht,
- Figur 2: die kontinuierlich arbeitende Presse nach Figur 1 in Draufsicht,
- Figur 3: den Einlaufbereich der kontinuierlich arbeitenden Presse nach Figur 1 in größerem Maßstab,
- Figur 4: die kontinuierlich arbeitende Presse nach Figur 1 für die Durchführung des Verfahrens nach Anspruch 2 und
- Figur 5: die kontinuierlich arbeitende Presse nach Figur 1 für die Durchführung des Verfahrens nach Anspruch 3.

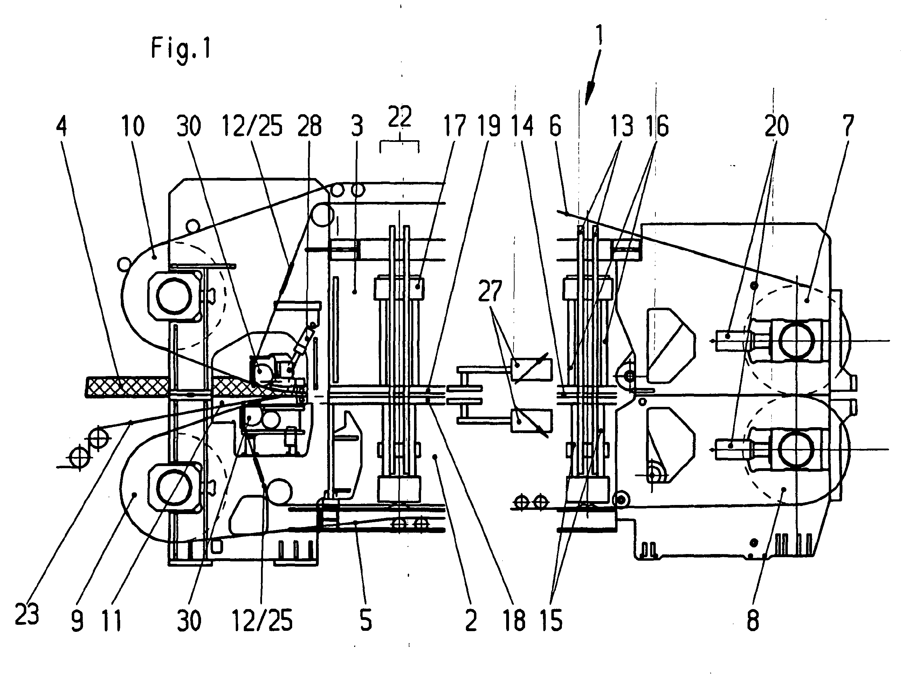

Die kontinuierlich arbeitende Presse 1 zur Durchführung des Verfahrens besteht nach den Figuren 1 bis 5 in ihren Hauptteilen aus dem festen unteren Rahmenteil 2, dem beweglichen über Zylinderkolbenanordnungen 17 heb- und senkbaren oberen Rahmenteil 3 und den Zugrahmen-Pressenständern 22. Am oberen Rahmenteil 3 und unteren Rahmenteil 2 sind als Verlängerung Seitenschilder 21 fest angebracht und dienen als Verankerung und Lagerstelle für die Antriebstrommeln 7 und 8, für die Einlauftrommeln 9 und 10 und den Zylinder-Kolbenanordnungen 17. Der obere Rahmenteil 3 und der untere Rahmenteil 2 bestehen nur aus Stegblechen 15 und 16. Mehrere Zugrahmen-Pressenständer 22 bilden durch Aneinanderreihung und Anbringung der beheizten und/oder kühlbaren Pressplatten 18 und 19 die Länge von Rahmenteil 3 und Rahmenteil 2 und somit der kontinuierlich arbeitenden Presse 1. Die aus den Stegblechen links und rechts herausragenden Ansätze bzw. Auskragungen mit den Zuglaschen 13 wirken als Widerlager für die Zylinderkolbenanordnungen 17 zum Heben und Senken des oberen Rahmenteils 3 mit den beheizbaren Pressplatten 18 und 19.

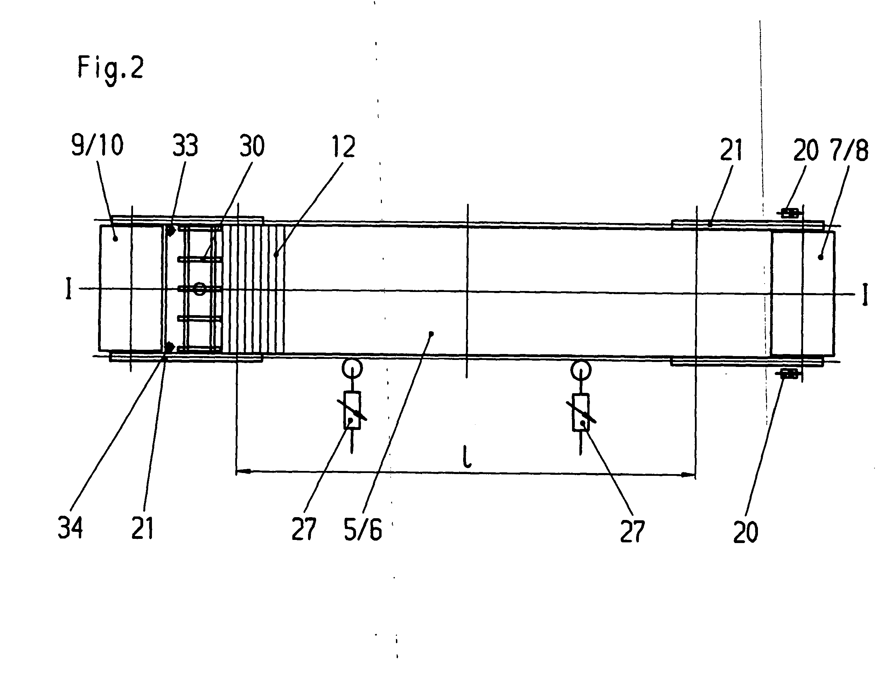

Aus den Figuren 1, 4 und 5 ist weiter zu entnehmen, wie die Einlauftrommeln 9 und 10 den Einlaufspalt 11 bilden und wie sich die mit den Stahlbändern 5 und 6 um die Rahmenteile 2 und 3 umlaufenden in Führungsketten 25 geführten Rollstangen 12 gegen Widerlager der Rahmenteile 2 und 3 abstützen. Das heißt, die umlaufenden Rollstangen 12 sind zwischen den Pressplatten 18 und 19 und den Stahlbändern 5 und 6 mitrollend geführt und werden von Rollstangeneinführungsrädern 30 orthogonal ausgerichtet den Stahlbändern 5 und 6 übergeben. Die Pressgutmatte 4 wird mittels Formband 23 in den Einlaufspalt 11 von den Stahlbändern 5 und 6 in den Pressbereich bzw. Pressspalt 14 eingeführt. Die Einjustierung und Grobregulierung der Stahlbänder 5 und 6 nach Figur 2 erfolgt weiter auf die Längsachse I-I durch Verstellung der Antriebstrommelachsen mittels der Stellantriebe 20.

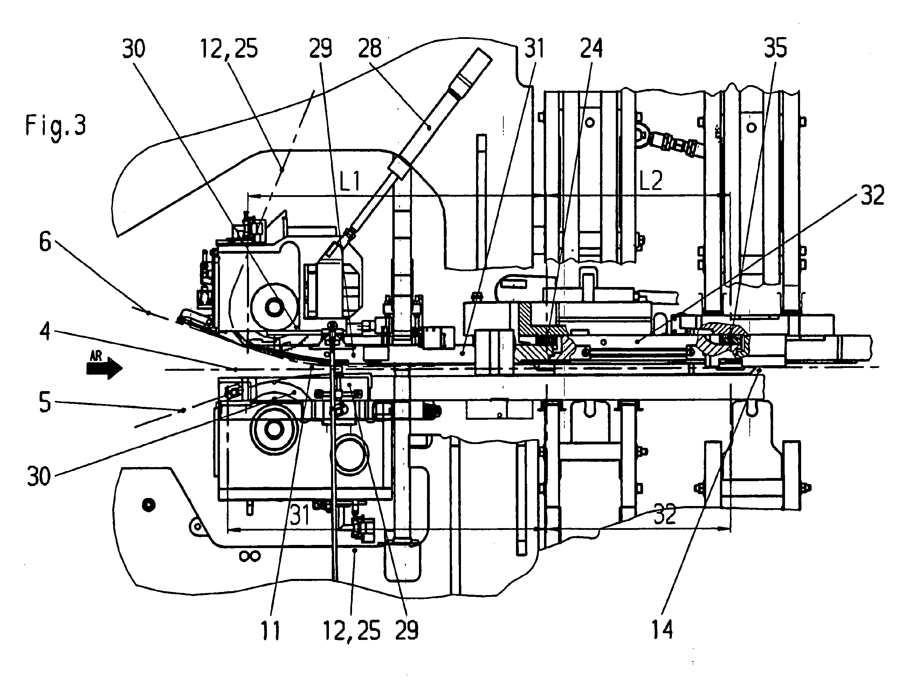

Wie aus DE 43 01 594 C2 bekannt, besteht der Einlaufbereich nach Figur 3 aus dem Keilverdichtereinlauf 31 mit der Länge L1 und dem Keilverdichterauslauf 32 mit der Länge L2, die miteinander über ein Gelenk 24 verbunden sind. Der Keilverdichterauslauf 32 ist jeweils mit der ersten Pressenplatte 18 und 19 des Hauptpressbereichs über ein Gelenk 35 verbunden.

Durch das Rollstangeneinlaufwerk nach den Figuren 1 bis 5 und mit einer Bandverlaufsregelung wird eine feinfühlige Stahlbandverlaufsregelung ermöglicht, wobei die Zurückstellung der Stahlbänder 5 und 6 in die Längsachse I-I gemäß der Erfindung (Lösung 1 und Anspruch 1) durch einseitiges Anheben eines der vorderen Enden, entweder der linken Anhebestelle 33 oder der rechten Anhebestelle 34, des Keilverdichtereinlaufs 31 erfolgt. Damit entsteht eine einseitige Erhöhung des Kompressionswinkels α₁ zu der Einlaufplatte 29 und gegebenenfalls auch der Keilverdichterauslaufplatte von der Anhebestelle 33 oder 34 zum hinteren Ende der Einlaufplatte 29 oder zusätzlich der Keilverdichterauslaufplatte in den Gelenken 24 und 35.

Gemäß Lösung II und Anspruch 2 erfolgt die Rückstellung der Stahlbänder 5 und 6 durch ein einseitiges Anheben einer zwischen den Einlauftrommeln 9 und 10 und den Rollstangeneinführungsrädern 30 angeordneten auf eines oder beide Stahlbänder mittels Stellantriebe 36 drückenden Verdichterrolle 26, so dass sich eine einseitige Vergrößerung des Kompressionswinkels auf die Pressgutmatte 4 einstellt. Die Verdichtungsrollen 26 reichen dabei beidseitig über die Breite der Stahlbänder 5 und 6 hinaus und sind hier mittels der Stellantriebe 36 vertikal verstellbar.
Nach Anspruch 3 erfolgt die Rückstellung der Stahlbänder 5 und 6 durch ein einseitiges Anheben der Einlauftrommeln 9 und/oder 10, so dass sich eine einseitige Vergrößerung des Kompressionswinkels auf die Pressgutmatte 4 einstellt.

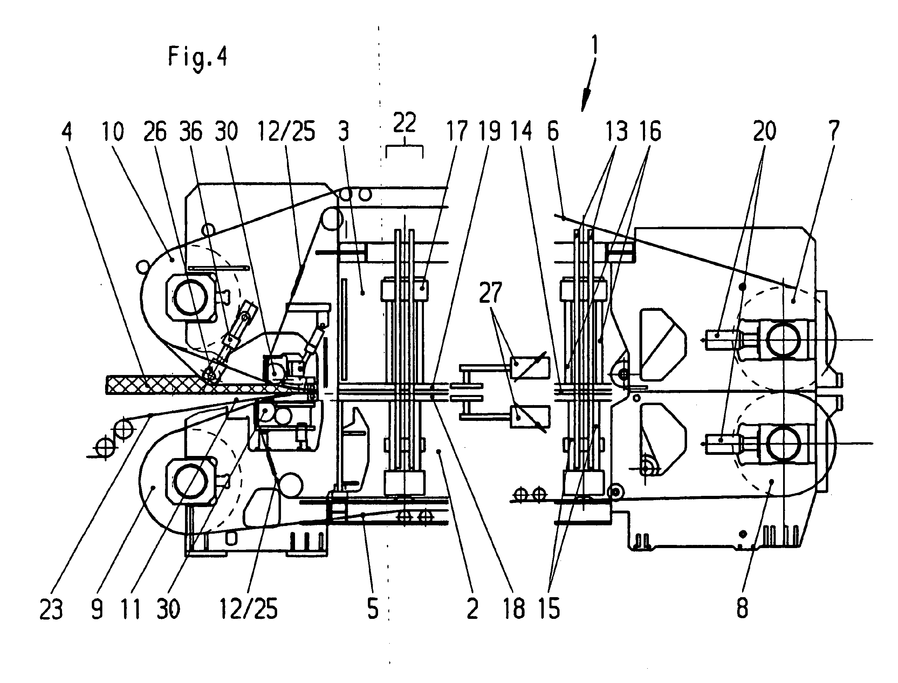

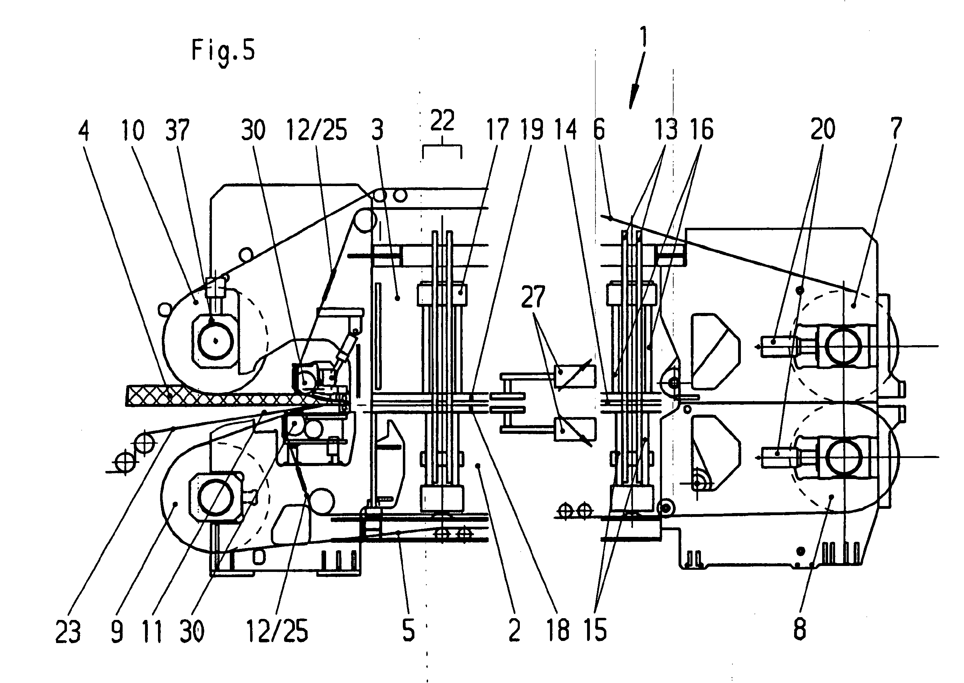

Die Rückstellung der Stahlbänder 5 und 6 parallel und längs der Längsachse I-I erfolgt durch elektromotorische oder hydraulische Antriebe bzw. Stellantriebe 28, 36 oder 37 aufgrund der Mess-Signale von an der kontinuierlich arbeitenden Presse 1 angeordneten und an den Stahlbänderkanten kontaktgebenden Verlaufssensoren 27. Dabei wertet ein Regelungsprozessor die Istmeßwerte der Sensoren aus und ermittelt über einen Regelalgorithmus Ausgangssignale, die als Stellwertsignale an die Stellantriebe 28, 36 und/oder 37 ausgegeben werden und somit dem Stahlbandverlauf entgegenwirken. Die Lösungen nach Figur 4 und Figur 5 (Anspruch 2 und Anspruch 3) sind nur praktikabel, wenn der Herstellungsprozess auch eine Verdichtung der Pressgutmatte 4 vor dem Keilverdichtereinlaufbereich vorsieht.
Die Rückstellungseinrichtungen gemäß der Erfindung sind nur im oberen Teil der kontinuierlich arbeitenden Presse 1 für das obere Stahlband 6 zeichnerisch dargestellt. Analog dazu ist sie selbstverständlich auch im unteren Teil der kontinuierlich arbeitenden Presse für das Stahlband 5 vorgesehen.

### Bezugszeichenliste

- 1.: kontinuierlich arbeitende Presse
- 2.: Rahmenteil unten
- 3.: Rahmenteil oben
- 4.: Pressgutmatte
- 5.: Stahlband unten
- 6.: Stahlband oben
- 7.: Antriebstrommel unten
- 8.: Antriebstrommel oben
- 9.: Einlauftrommel unten
- 10.: Einlauftrommel oben
- 11.: Einlaufspalt
- 12.: Rollstangen
- 13.: Zuglaschen
- 14.: Pressspalt
- 15.: Stegblech unten
- 16.: Stegblech oben
- 17.: Zylinderkolbenanordnungen
- 18.: Pressenplatte unten
- 19.: Pressenplatte oben
- 20.: Stellantrieb für Antriebstrommeln
- 21.: Seitenschilder
- 22.: Zugrahmen-Pressenständer
- 23.: Formband
- 24.: Gelenk
- 25.: Führungsketten
- 26.: Verdichterrolle
- 27.: Verlaufssensoren
- 28.: Stellantrieb
- 29.: Einlaufplatte von Keilverdichtereinlauf
- 30.: Rollstangeneinführungsrad
- 31.: Keilverdichtereinlauf (KVE)
- 32.: Keilverdichterauslauf (KVA)
- 33.: Anhebestelle links
- 34.: Anhebestelle rechts
- 35.: Gelenk
- 36.: Stellantrieb
- 37.: Stellantrieb Einlauftrommel
- I-I: Längsachse der kontinuierlich arbeitenden Presse 1
- L: Pressenlänge
- L1: KVE - Länge
- L2: KVA - Länge

## Patentansprüche

1. Verfahren zur Stahlbandführung in einer kontinuierlich arbeitenden Presse (1) zur Herstellung von Spanplatten, Faserplatten und Sperrholzplatten oder Kunststoffplatten, mit den Pressdruck übertragenden sowie das zu pressende Gut durch die Presse (1) ziehenden, flexiblen, endlosen Stahlbändern (5 und 6), wobei die Pressgutmatte (4) auf einem sich kontinuierlich bewegendem Formband (23) zu einem Keilverdichterenlauf (31) und einem Keilverdichterauslauf (32) im Einlaufspalt (11) der kontinuierlich arbeitenden Presse (1) zwischen die Stahlbänder (5 und 6) in den Pressspalt (14) eingeführt wird, die Stahlbänder (5 und 6) über Antriebstrommeln (7 und 8) und Einlauftrommeln (9 und 10) um einen oberen und unteren Rahmenteil (2 und 3) geführt sind und die sich mit einstellbarem Pressspalt (14) über mitlaufende, mit ihren Achsen quer zur Banddurchlaufrichtung geführte Rollstangen (12) gegen Widerlager an den Rahmenteilen (2 und 3) angebrachten beheizten Pressplatten (18 und 19) abstützen, wobei der Verlauf der Stahlbänder aus der Längsachse I-I mittels über den Stahlbandlängskanten angeordneten Verlaufssensoren (27) gemessen und mit einer Bandlaufregeleinrichtung in die Längsachse I-I der kontinuierlich arbeitenden Presse eingeregelt wird, **dadurch gekennzeichnet, dass** die Rückstellung der Stahlbänder (5 und 6) in die Längsachse I-I der kontinuierlich arbeitenden Presse (1) durch ein zeitlich begrenztes vertikales Anheben eines der vorderen Enden der Einlaufplatte (29) des keilverdichtereinlaufs (31) erfolgt, so dass sich eine einseitige Vergrößerung des Kompressionswinkels an der Einlaufplatte (29) des Keilverdichtereinlaufs (KVE) einstellt, bis die Rückstellung des zu regelnden Stahlbandes (5 oder 6) beendet ist.

2. Verfahren zur Stahlbandführung in einer kontinuierlich arbeitenden Presse (1) zur Herstellung von Spanplatten, Faserplatten und Sperrholzplatten oder Kunststoffplatten, mit den Pressdruck übertragenden sowie das zu pressende Gut durch die Presse ziehenden, flexiblen, endlosen Stahlbändern (5 und 6), wobei die Pressgutmatte (4) auf einem sich kontinuierlich bewegendem Formband (23) zu einem Keilverdichtereinlauf (31) und einem Keilverdichterauslauf (32) im Einlaufspalt (11) der kontinuierlich arbeitenden Presse (1) zwischen die Stahlbänder (5 und 6) in den Pressspalt (14) eingeführt wird, die Stahlbänder (5 und 6) über Antriebstrommeln (7 und 8) und Einlauftrommeln (9 und 10) um einen oberen und unteren Rahmenteil (2 und 3) geführt sind und die sich mit einstellbarem Pressspalt (14) über mitlaufende, mit ihren Achsen quer zur Banddurchlaufrichtung geführte Rollstangen (12) gegen Widerlager an den Rahmenteilen (2 und 3) angebrachten beheizten Pressplatten (18 und 19) abstützen, wobei der Verlauf der Stahlbänder aus der Längsachse I-I mittels über den Stahlbandlängskanten angeordneten Verlaufssensoren (27) gemessen und mit einer Bandlaufregeleinrichtung in die Längsachse I-I der kontinuierlich arbeitenden Presse eingeregelt wird, **dadurch gekennzeichnet, dass** die Rückstellung der Stahlbänder (5 und 6) in die Längsachse I-I der kontinuierlich arbeitenden Presse (1) durch ein zeitlich begrenztes einseitige vertikales Anheben einer zwischen der Einlauftrommel (9 oder 10) und dem Rollstangeneinführungsrad (30) angeordneten auf das Stahlband (5 oder 6) drückenden Verdichterrolle (26) erfolgt, so dass sich im Querschnitt der Pressgutmatte (4) ein über die Breite (b) abweichende Planparallelität formt und sich mit der höheren Längsseite der Pressgutmatte (4) ein einseitig höherer Gegendruck an der Einlaufplatte (29) des Keilverdichtereinlaufs (31) einstellt, bis die Rückstellung des zu regelnden Stahlbandes (5 oder 6) beendet ist.

3. Verfahren zur Stahlbandführung in einer kontinuierlich arbeitenden Presse (1) zur Herstellung von Spanplatten, Faserplatten und Sperrholzplatten oder Kunststoffplatten, mit den Pressdruck übertragenden sowie das zu pressende Gut durch die Presse ziehenden, flexiblen, endlosen Stahlbändern (5 und 6), wobei die Pressgutmatte (4) auf einem sich kontinuierlich bewegendem Formband (23) zu einem Keilverdichtereinlauf (31) und einem Keilverdichterauslauf (32) im Einlaufspalt (11) der kontinuierlich arbeitenden Presse (1) zwischen die Stahlbänder (5 und 6) in den Pressspalt (14) eingeführt wird, die Stahlbänder (5 und 6) über Antriebstrommeln (7 und 8) und Einlauftrommeln (9 und 10) um einen oberen und unteren Rahmenteil (2 und 3) geführt sind und die sich mit einstellbarem Pressspalt (14) über mitlaufende, mit ihren Achsen quer zur Banddurchlaufrichtung geführte Rollstangen (12) gegen Widerlager an den Rahmenteilen (2 und 3) angebrachten beheizten Pressplatten (18 und 19) abstützen, wobei der Verlauf der Stahlbänder aus der Längsachse I-I mittels über den Stahlbandlängskanten angeordneten Verlaufssensoren (27) gemessen und mit einer Bandlaufregeleinrichtung in die Längsachse I-I der kontinuierlich arbeitenden Presse eingeregelt wird, **dadurch gekennzeichnet, dass** die Rückstellung der Stahlbänder (5 und 6) in die Längsachse I-I der kontinuierlich arbeitenden Presse (1) durch ein zeitlich begrenztes einseitiges vertikales Anheben der Einlauftrommeln (9 oder 10) erfolgt, so dass sich im Querschnitt der Pressgutmatte (4) ein über die Breite (b) abweichende Planparallelität formt und sich mit der höheren Längsseite der Pressgutmatte (4) ein einseitig höherer Gegendruck an der Einlaufplatte (29) des Keilverdichtereinlaufs (31) einstellt, bis die Rückstellung des zu regelnden Stahlbandes (5 oder 6) beendet ist.

4. Verfahren zur Stahlbandführung nach den Ansprüchen 1, 2 oder 3, **dadurch gekennzeichnet, dass** die Rückstellung des aus der Längsachse I-I verlaufenden Stahlbandes (5 oder 6) durch ein zeitlich begrenztes Anheben durch ein weg-geregeltes Anheben oder indirekt durch eine druckgeregelte oder druckgesteuerte Entlastung in den Zylindern der Stellantriebe (28, 36, 37) durchgeführt wird.

5. Verfahren zur Stahlbandführung nach den Ansprüchen 1 bis 4, **gekenntzeichnet durch** einen Regelkreis mit dem die Rückstellung der Stahlbänder (5 und 6) durch die Stellantriebe (28, 36, 37) mittels der ermittelten Verlaufsmesswerte eines oder mehrerer Verlaufssensoren (27) und einem PID-Regler erfolgt.

6. Verfahren zur Stahlbandführung nach den Ansprüchen 1 bis 5 **gekennzeichnet, durch** eine Grundeinstellung mit einem fest eingestelltem Differenzhub oder einer fest eingestellten Druckdifferenz.

7. Verfahren zur Stahlbandführung nach Anspruch 1, **dadurch gekennzeichnet, dass** die Rückstellung der Stahlbänder (5, 6) in die Längsachse I-I der kontinuierlich arbeitenden Presse (1) durch ein zeitlich begrenztes Anheben eines der vorderen Enden des der Einlaufplatte (29) des Keilverdichtereinlaufts (31) und Keilverdichterauslaufplatte des Keilverdichtereinlaufts (32) erfolgt,

8. Kontinuierlich arbeitende Presse (1) zur Durchführung des Verfahrens nach den Ansprüchen 1 bis 10, bestehend aus zwei das zu pressende Gut durch die Presse ziehenden, flexiblen, endlosen Stahlbändern (5 und 6), wobei die Pressgutmatte (4) auf einem sich kontinuierlich bewegendem Formband (23) zu einem Keilverdichtereinlauf (31) und einem Keilverdichterauslauf (32) im Einlaufspalt (11) der kontinuierlich arbeitenden Presse (1) zwischen die Stahlbänder (5 und 6) in den Pressspalt (14) einführbar ist, die Stahlbänder (5 und 6) über Antriebstrommeln (7 und 8) und Einlauftrommeln (9 und 10) um einen oberen und unteren Rahmenteil (2 und 3) geführt und mit einstellbarem Pressspalt (14) über mitlaufende, mit ihren Achsen quer zur Banddurchlaufrichtung geführte Rollstangen (12) gegen Widerlager an den Rahmenteilen (2 und 3) angebrachten beheizten Pressplatten (18 und 19) abstützen, der Verlauf der Stahlbänder aus der Längsachse I-I mittels über den Stahlbandlängskanten angeordneten Verlaufssensoren (27) gemessen und mit einer Bandlaufregeleinrichtung in die Längsachse I-I der kontinuierlich arbeitenden Presse einregelbar ist, **dadurch gekennzeichnet, dass** die Rückstellung der Stahlbänder (5 und 6) in die Längsachse I-I der kontinuierlich arbeitenden Presse (1) durch ein zeitlich begrenztes einseitiges Anheben einer der Längsseiten der Stahlbänder (5, 6) vorgesehen ist, wobei die Einlaufplatte (29) des Keilverdichtereinlaufs (KVE) oder die Einlauftrommel (9, 10) und/oder eine Verdichterrolle (26) einseitig mittels elektromotorischer oder hydraulischer Stellantriebe (28, 36, 37) vertikal anhebbar angeordnet sind und wobei die Bandlaufregeteinrichtung zur Erstellung von Stellwertsignalen für die Stellantriebe (28, 36, 37) ein die Istmeßwerte der Verlaufssensoren (27) mittels eines Regelalgorithmus auswertenden Regelungsprozessor aufweist.

## Claims

1. Process for steel belt guidance in a continuously operating press (1) for manufacturing particleboards, fiber panels and plywood panels or plastic panels, with flexible, endless steel belts (5 and 6) that transmit the press pressure and pull the material to be pressed through the press (1), in which case the press material mat (4) is transported to a wedge compactor infeed (31) and a wedge compactor outfeed (32) in the infeed gap (11) of the continuously operating press (1) on a continuously moving forming belt (23) and guided into the press gap (14) between the steel belts (5 and 6), the steel belts (5 and 6) are guided by means of drive drums (7 and 8) and infeed drums (9 and 10) around an upper and lower frame part (2 and 3) and support themselves with an adjustable press gap (14) by means of co-rotating rolling rods (12) with their axes at right angles to the belt running direction against counter-bearings on heated press plates (18 and 19) attached to the frame parts (2 and 3), in which case the track of the steel belts away from the lengthways axis I-I is measured by means of track sensors (27) arranged on the lengthways edges of the steel belt and is controlled by means of a belt tracking control device in the lengthways axis I-I of the continuously operating press,
**characterized in that**
the repositioning of the steel belts (5 and 6) into the lengthways axis I-I of the continuously operating press (1) is performed by a time-limited vertical lifting off of one of the front ends of the infeed plate (29) of the wedge compactor infeed (31), with the effect that a one-sided increase in the compression angle at the infeed plate (29) of the wedge compactor infeed (KVE) is set until the repositioning of the steel belt (5 or 6) to be controlled is completed.

2. Process for steel belt guidance in a continuously operating press (1) for manufacturing particleboards, fiber panels and plywood panels or plastic panels, with flexible, endless steel belts (5 and 6) that transmit the press pressure and pull the material to be pressed through the press, in which case the press material mat (4) is transported to a wedge compactor infeed (31) and a wedge compactor outfeed (32) in the infeed gap (11) of the continuously operating press (1) on a continuously moving forming belt (23) and guided into the press gap (14) between the steel belts (5 and 6), the steel belts (5 and 6) are guided by means of drive drums (7 and 8) and infeed drums (9 and 10) around an upper and lower frame part (2 and 3) and support themselves with an adjustable press gap (14) by means of co-rotating rolling rods (12) with their axes at right angles to the belt running direction against counter-bearings on heated press plates (18 and 19) attached to the frame parts (2 and 3), in which case the track of the steel belts away from the lengthways axis I-I is measured by means of track sensors (27) arranged on the lengthways edges of the steel belt and is controlled by means of a belt tracking control device in the lengthways axis I-I of the continuously operating press,
**characterized in that**
the repositioning of the steel belts (5 and 6) into the lengthways axis I-I of the continuously operating press (1) is performed by a time-limited, one-sided, vertical lifting off of a compressing roller (26) arranged between the infeed drum (9 or 10) and the rolling rod infeed wheel (30) pressing onto the steel belt (5 or 6), with the effect that a plane parallelism with deviation over the width (b) is formed in the cross section of the press material mat (4) and with the higher lengthways side of the press material mat (4) there is a higher counter-pressure on one side of the infeed plate (29) of the wedge compactor infeed (31), until the repositioning of the steel belt (5 or 6) to be controlled is completed.

3. Process for steel belt guidance in a continuously operating press (1) for manufacturing particleboards, fiber panels and plywood panels or plastic panels, with flexible, endless steel belts (5 and 6) that transmit the press pressure and pull the material to be pressed through the press, in which case the press material mat (4) is transported to a wedge compactor infeed (31) and a wedge compactor outfeed (32) in the infeed gap (11) of the continuously operating press (1) on a continuously moving forming belt (23) and guided into the press gap (14) between the steel belts (5 and 6), the steel belts (5 and 6) are guided by means of drive drums (7 and 8) and infeed drums (9 and 10) around an upper and lower frame part (2 and 3) and support themselves with an adjustable press gap (14) by means of co-rotating rolling rods (12) with their axes at right angles to the belt running direction against counter-bearings on heated press plates (18 and 19) attached to the frame parts (2 and 3), in which case the track of the steel belts away from the lengthways axis I-I is measured by means of track sensors (27) arranged on the lengthways edges of the steel belt and is controlled by means of a belt tracking control device in the lengthways axis I-I of the continuously operating press,
**characterized in that**
the repositioning of the steel belts (5 and 6) into the lengthways axis I-I of the continuously operating press (1) is performed by a time-limited, one-sided, vertical lifting off of the infeed drums (9 or 10), with the effect that a plane parallelism with deviation over the width (b) is formed in the cross section of the press material mat (4) and with the higher lengthways side of the press material mat (4) there is a higher counter-pressure on one side of the infeed plate (29) of the infeed wedge compactor infeed (31), until the repositioning of the steel belt (5 or 6) to be controlled is completed.

4. The process for steel belt guidance in accordance with Claims 1, 2 or 3,
**characterized in that** the repositioning of the steel belt (5 or 6) running out of the lengthways axis I-I is performed by a time-limited raising, by a position-controlled raising or indirectly by an open or closed-loop, pressure-controlled depressurization in the cylinders of the actuator drives (28, 36, 37).

5. The process for steel belt guidance in accordance with Claims 1 to 4,
**characterized by** a control circuit with which the repositioning of the steel belts (5 and 6) is performed using the actuator drives (28, 36, 37) by means of the obtained tracking measurement values of one or more tracking sensors (27) and a PID controller.

6. The process for steel belt guidance in accordance with Claims 1 to 5,
**characterized by** a basic setting with a set differential stroke or a set pressure differential.

7. The process for steel belt guidance in accordance with Claim 1,
**characterized in that** the repositioning of the steel belts (5, 6) into the lengthways axis I-I of the continuously operating press (1) is performed using a time-limited lifting of one of the front ends of the infeed plate (29) of the wedge compactor infeed (31) and the wedge compactor outfeed plate of the wedge compactor outfeed (32).

8. Continuously operating press (1) for performing the process in accordance with Claims 1 to 10 comprising two flexible, endless steel belts (5 and 6) that pull the material to be pressed through the press, in which case the press material mat (4) is transported to a wedge compactor infeed (31) and a wedge compactor outfeed (32) in the infeed gap (11) of the continuously operating press (1) on a continuously moving forming belt (23) and can be guided into the press gap (14) between the steel belts (5 and 6), the steel belts (5 and 6) are guided by means of drive drums (7 and 8) and infeed drums (9 and 10) around an upper and lower frame part (2 and 3) and support themselves with an adjustable press gap (14) by means of co-rotating rolling rods (12) with their axes at right angles to the belt running direction against counter-bearings on heated press plates (18 and 19) attached to the frame parts (2 and 3), in which case the track of the steel belts away from the lengthways axis I-I is measured by means of track sensors (27) arranged on the lengthways edges of the steel belt and can be controlled by means of a belt tracking control device in the lengthways axis I-I of the continuously operating press,
**characterized in that**
the repositioning of the steel belts (5 and 6) into the lengthways axis I-I of the continuously operating press (1) is designed to be performed by a time-limited, one-sided raising of a one of the lengthways sides of the steel belts (5, 6), with the infeed plate (29) of the wedge compactor infeed (KVE) or the infeed drum (9, 10) and/or a compressing roller (26) arranged to be vertically liftable on one side by means of actuator drives (28, 36, 37) driven by electric motor or hydraulically, and the belt tracking control device for creating positioning value signals for the actuator drives (28, 36, 37) has a control processor which evaluates the actual measurement values of the tracking sensor (27) by means of a control algorithm.

## Revendications

1. Procédé pour le guidage d'une bande d'acier dans une presse à fonctionnement continu (1) pour la production de panneaux d'agglomérés, panneaux en fibres et panneaux en contreplaqué ou panneaux en matière plastique, avec des bandes d'acier continues flexibles (5 et 6) transmettant la pression de pressage et tirant le produit à presser à travers la presse (1), dans quel cas le tapis de produit à presser (4) est inséré sur une courroie de moulage à mouvement continu (23) à une entrée de compresseur à clavette (31) et une sortie de compresseur à clavette (32) dans la fente d'entrée (11) de la presse fonctionnant en continu (1) entre les bandes d'acier (5 et 6) dans la fente de pressage (14), les bandes d'acier (5 et 6) étant passées par des tambours d'entraînement (7 et 8) et des tambours d'entrée (9 et 10) autour d'un élément de châssis supérieur et inférieur (2 et 3) et reposant avec la fente de pressage réglable (14) via des barres de rotation (12) libres disposées avec leurs axes dans le sens transversal par rapport au sens de rotation de bande contre des butées sur plaques de pression chauffées (18 et 19) montées sur les éléments de châssis (2 et 3), dans quel cas l'alignement des bandes d'acier est mesuré sur l'axe longitudinal I-I par des capteurs d'alignement (27) disposés au niveau des bords longitudinaux de la bande d'acier et réglé au moyen d'un dispositif de réglage d'alignement de bande sur l'axe longitudinal I-I de la presse à fonctionnement continu,
**caractérisé par le fait**
**que** le repositionnement des bandes d'acier (5 et 6) à l'axe longitudinal I-I de la presse à fonctionnement continu (1) s'effectue par un soulèvement vertical, temporaire d'une des extrémités avant de la plaque d'entrée (29) de l'entrée de compresseur à clavette (31) de façon qu'une augmentation unilatérale de l'angle de compression sur la plaque d'entrée (29) de l'entrée de compresseur à clavette (KVE) se montre jusqu'à ce que le repositionnement de la bande d'acier à régler (5 ou 6) soit terminé.

2. Procédé pour le guidage d'une bande d'acier dans une presse à fonctionnement continu (1) pour la production de panneaux d'agglomérés, panneaux en fibres et panneaux en contreplaqué ou panneaux en matière plastique, avec des bandes d'acier continues flexibles (5 et 6) transmettant la pression de pressage et tirant le produit à presser à travers la presse, dans quel cas le tapis de produit à presser (4) est inséré sur une courroie de moulage à mouvement continu (23) à une entrée de compresseur à clavette (31) et une sortie de compresseur à clavette (32) dans la fente d'entrée (11) de la presse fonctionnant en continu (1) entre les bandes d'acier (5 et 6) dans la fente de pressage (14), les bandes d'acier (5 et 6) étant passées par des tambours d'entraînement (7 et 8) et des tambours d'entrée (9 et 10) autour d'un élément de châssis supérieur et inférieur (2 et 3) et reposant avec la fente de pressage réglable (14) via des barres de rotation (12) libres disposées avec leurs axes dans le sens transversal par rapport au sens de rotation de bande contre des butées sur plaques de pression chauffées (18 et 19) montées sur les éléments de châssis (2 et 3), dans quel cas l'alignement des bandes d'acier est mesuré sur l'axe longitudinal I-I par des capteurs d'alignement (27) disposés au niveau des bords longitudinaux de la bande d'acier et réglé au moyen d'un dispositif de réglage d'alignement de bande sur l'axe longitudinal I-I de la presse à fonctionnement continu,
**caractérisé par le fait**
**que** le repositionnement des bandes d'acier (5 et 6) à l'axe longitudinal I-I de la presse à fonctionnement continu (1) s'effectue par un soulèvement vertical, temporaire d'un côté d'un rouleau compresseur (26) disposé entre le tambour d'entrée (9 ou 10) et la roue d'introduction de barre de rotation (30) et faisant pression sur la bande d'acier (5 ou 6) de façon qu'une parallélisme divergeant sur la longueur (b) se forme dans la section du tapis de produit à presser (4) et qu'une contre-pression plus élevée d'un côté se montre avec le côté longitudinal plus haut du tapis de produit à presser (4) sur la plaque d'entrée (29) de l'entrée de compresseur à clavette (31) jusqu'à ce que le repositionnement de la bande d'acier à régler (5 ou 6) soit terminé.

3. Procédé pour le guidage d'une bande d'acier dans une presse à fonctionnement continu (1) pour la production de panneaux d'agglomérés, panneaux en fibres et panneaux en contreplaqué ou panneaux en matière plastique, avec des bandes d'acier continues flexibles (5 et 6) transmettant la pression de pressage et tirant le produit à presser à travers la presse, dans quel cas le tapis de produit à presser (4) est inséré sur une courroie de moulage à mouvement continu (23) à une entrée de compresseur à clavette (31) et une sortie de compresseur à clavette (32) dans la fente d'entrée (11) de la presse fonctionnant en continu (1) entre les bandes d'acier (5 et 6) dans la fente de pressage (14), les bandes d'acier (5 et 6) étant passées par les tambours d'entraînement (7 et 8) et les tambours d'entrée (9 et 10) autour d'un élément de châssis supérieur et inférieur (2 et 3) et reposant avec la fente de pressage réglable (14) via des barres de rotation (12) libres disposées avec leurs axes dans le sens transversal par rapport au sens de rotation de bande contre des butées sur plaques de pression chauffées (18 et 19) montées sur les éléments de châssis (2 et 3), dans quel cas l'alignement des bandes d'acier est mesuré sur l'axe longitudinal I-I par des capteurs d'alignement (27) disposés au niveau des bords longitudinaux de la bande d'acier et réglé au moyen d'un dispositif de réglage d'alignement de bande sur l'axe longitudinal I-I de la presse à fonctionnement continu,
**caractérisé par le fait**
**que** le repositionnement des bandes d'acier (5 et 6) à l'axe longitudinal I-I de la presse à fonctionnement continu (1) s'effectue par un soulèvement vertical, temporaire des tambours d'entrée (9 ou 10) d'un côté de façon qu'une parallélisme divergeant sur la longueur (b) se forme dans la section du tapis de produit à presser (4) et qu'une contre-pression plus élevée d'un côté se montre avec le côté longitudinal plus haut du tapis de produit à presser (4) sur la plaque d'entrée (29) de l'entrée de compresseur à clavette (31) jusqu'à ce que le repositionnement de la bande d'acier à régler (5 ou 6) soit terminé.

4. Procédé pour le guidage d'une bande d'acier selon les revendications 1, 2 ou 3,
**caractérisé par le fait que** le repositionnement de la bande d'acier (5 ou 6) se déroulant de l'axe longitudinal I-I est réalisé par un soulèvement temporaire, par un soulèvement réglé en course ou indirectement par la détente réglée en pression ou commandée en pression dans les vérins des servomoteurs (28, 36, 37).

5. Procédé pour le guidage d'une bande d'acier selon les revendications 1 à 4,
**caractérisé par** un circuit de régulation, qui réalise le repositionnement des bandes d'acier (5 et 6) par les servomoteurs (28, 36, 37) au moyen des valeurs de mesure d'alignement déterminés par un ou plusieurs capteurs d'alignement (27) ou un régulateur PID.

6. Procédé pour le guidage d'une bande d'acier selon les revendications 1 à 5,
**caractérisé par** un réglage de base avec une course différentielle réglée en fixe ou une pression différentielle réglée en fixe.

7. Procédé pour le guidage d'une bande d'acier selon la revendication 1,
**caractérisé par le fait que** le repositionnement des bandes d'acier (5, 6) à l'axe longitudinal I-I de la presse à fonctionnement continu (1) s'effectue par le soulèvement temporaire d'une des l'extrémités avant de la plaque d'entrée (29) de l'entrée de compresseur clavette (31) et de la plaque de sortie de la sortie de compresseur à clavette (32).

8. Presse à fonctionnement continu (1) pour réaliser le procédé selon les revendications 1 à 10 comportant deux bandes d'acier continues flexibles (5 et 6) tirant le produit à presser à travers la presse, dans quel cas le tapis de produit à presser (4) est insérable sur une courroie de moulage à mouvement continu (23) à une entrée de compresseur à clavette (31) et une sortie de compresseur à clavette (32) dans la fente d'entrée (11) de la presse fonctionnant en continu (1) entre les bandes d'acier (5 et 6) dans la fente de pressage (14), les bandes d'acier (5 et 6) étant passées par les tambours d'entraînement (7 et 8) et les tambours d'entrée (9 et 10) autour d'un élément de châssis supérieur et inférieur (2 et 3) et reposant avec la fente de pressage réglable (14) via des barres de rotation (12) libres disposées avec leurs axes dans le sens transversal par rapport au sens de rotation de bande contre des butées sur plaques de pression chauffées (18 et 19) montées sur les éléments de châssis (2 et 3), dans quel cas l'alignement des bandes d'acier est mesuré sur l'axe longitudinal I-I par des capteurs d'alignement (27) disposés au niveau des bords de la bande d'acier et réglé au moyen d'un dispositif de réglage d'alignement de bande sur l'axe longitudinal I-I de la presse à fonctionnement continu, **caractérisé par le fait**
**que** le repositionnement des bandes d'acier (5 et 6) à l'axe longituindal I-I de la presse à fonctionnement continu (1) est prévu par un soulèvement temporaire unilatéral d'un des côtés longitudinaux des bandes d'acier (5, 6), dans quel cas la plaque d'entrée (29) de l'entrée de compresseur à clavette (KVE) ou le tambour d'entrée (9, 10) et/ou un rouleau compresseur (26) sont disposés de manière soulevable verticalement d'un côté par des servomoteurs électriques ou hydrauliques (28, 36, 37) et dans quel cas le dispositif de réglage d'alignement de bande pour la génération de signaux de valeur de réglage pour les servomoteurs (28, 36, 37) est doté d'un processeur de réglage évaluant les valeurs réelles mesurées des capteurs d'alignement (27) au moyen d'un algorithme de réglage.
